(19) Europäisches Patentamt
European Patent Office
Office européen des brevets

(11) EP 4 124 849 A1

(12) **EUROPEAN PATENT APPLICATION**

(43) Date of publication:
**01.02.2023 Bulletin 2023/05**

(21) Application number: **21306068.4**

(22) Date of filing: **30.07.2021**

(51) International Patent Classification (IPC):
**G01N 21/27** *(2006.01)*  **G01N 21/3577** *(2014.01)*
**G01N 21/552** *(2014.01)*  *G01N 21/75* *(2006.01)*

(52) Cooperative Patent Classification (CPC):
**G01N 21/552; G01N 21/272; G01N 21/3577;**
G01N 21/75; G01N 2021/3595

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Centre national de la recherche scientifique**
**75016 Paris (FR)**
• **College de France**
**75231 Paris Cedex 05 (FR)**
• **Sorbonne Université**
**75006 Paris (FR)**
• **Université de Rennes 1**
**35065 Rennes Cedex (FR)**
• **Ecole Nationale Supérieure de Chimie de Rennes**
**35000 Rennes (FR)**

• **Institut National des Sciences Appliquées de Rennes**
**35700 Rennes (FR)**

(72) Inventors:
• **Tarascon, Jean-Marie**
**75014 Paris (FR)**
• **Gervillié, Charlotte**
**75009 Paris (FR)**
• **BOUSSARD, Catherine**
**35830 BETTON (FR)**
• **ZHANG, Xiang-Hua**
**35510 Cesson-Sévigné (FR)**
• **ADAM, Jean-Luc**
**35700 Rennes (FR)**

(74) Representative: **LLR**
**11, boulevard de Sébastopol**
**75001 Paris (FR)**

(54) **METHOD FOR OPERANDO CHARACTERIZATION OF CHEMICAL SPECIES WITHIN A BATTERY USING INFRARED SPECTROSCOPY**

(57)     Method for operando characterization of the chemical composition of a battery cell (12), comprising the following steps :
- inserting an optical fiber (14) made of chalcogenide glass through the battery cell (12),
- cycling the battery (12),
- while cycling the battery (12), generating an optical signal and transmitting it through the optical fiber (14),
- detecting, using an infrared spectrometer (20), the transmitted optical signal at an output extremity (140) of the optical fiber (14),
- recording the detected optical signal over time,
- locating signature wavelengths for which the optical signal intensity is above a predetermined threshold within the spectrum,
- associating said located signature wavelengths to at least one predetermined chemical species.

Fig. 1

EP 4 124 849 A1

**Description**

The invention relates to the field of batteries, and more particularly the field of characterizing the chemical species involved in the formation of the solid electrolyte interface layer (SEI) for batteries, that are forming upon battery cycling and the observation of the electrolyte degradation which include but not limit to Lithium ion (Li-ion) and Sodium-ion (Na-ion) batteries.

With batteries being increasingly used in both the transport and power sectors, there exists a need to increase their reliability and performance.

It is well-known in the field of batteries that the formation of the SEI layer, a passivating film that results from the self-limited partial catalytic decomposition of the electrolyte at the electrode surfaces for potentials beyond its range of thermodynamic stability, is one of the major factors influencing the performance of the battery cell over time. Indeed, even though the formation of the SEI Layer is essential for the battery cell to function, if it occurs in excess, it may lead to undesirable lithium ions consumption, significant increases in impedance, and the reduction of the active electrode area, leading to a decrease of the performance of the battery cell over time. As such, the formation of SEI and its stability, which mainly controls the cell lifetime is a critical and expensive step in cell manufacturing, rendering the protocols as trade secrets among the manufacturers. Similarly, based on the dynamic nature of the SEI, knowing the chemical evolution of the electrolyte when ageing or upon cycling is important in order to have a better understanding of the degradation phenomena

In the past, sensing activities within the field of batteries have mainly relied on the use of sensors placed outside, rather than inside battery cells. Knowledge of the internal chemical and/or physical parameters is therefore limited. More recently, the development of implantable optical sensors that can measure, via non-disruptive approaches, multiple parameters such as temperature, pressure, strain, electrolyte composition, and heat flow with high sensitivity at various locations within the cells has been developed. To that end, together with the relative signal stability of the optical signal and their suitability for wavelength multiplexing, physicists back in 2013 began using SMF-FBG (Single Mode Fiber - Fiber Bragg Grating) sensors.

However, these techniques do not allow knowing the nature and the formulae of the chemical species, which are necessary to fully understand the cascade-reactions mechanism leading to the formation of the SEI. The invention aims to overcome this limitation by allowing the identification of the electrolyte decomposition pathway and the chemical composition parasitic chemical species, such as alkyl carbonates and polyethylene glycol, forming the SEI.

To that end, the invention relates to a method for operando characterization of the chemical composition of a battery cell, comprising the following steps :

- inserting an optical fiber made of chalcogenide glass through the battery cell,
- generating an optical signal and transmitting it through the optical fiber,
- detecting, using an infrared spectrometer, the transmitted optical signal at an output extremity of the optical fiber,
- recording the detected optical signal over time,
- locating signature wavelengths for which the optical signal intensity is above a predetermined threshold,
- associating said located signature wavelengths to at least one predetermined chemical species.

The invention is based on the realization that the organic electrolyte and its decomposition products interact by absorption with infrared radiation within the 3 to 15 microns wavelength region. The invention aims to take advantage of this by considering transmitting an infrared signal within the electrolyte and to identify chemical species that appear while cycling the battery and affect said infrared signal using spectrometry. However, traditional silica ($SiO_2$) optical fibers, commonly used in telecommunications, transmit solely in the 0.8 to 2 microns wavelengths, hence rendering infrared detection impossible.

An aspect of the invention is therefore to use chalcogenide (Sulfides, Selenides, Tellurides) glasses that can transmit over the 3 to 13 microns wavelengths : by inserting a chalcogenide optical fiber through a battery cell and transmitting an optical signal through said fiber, the evanescent wave from the optical fiber will interact with the electrolyte of the battery cell and especially the organic solvents decomposition products that will appear during cycling of the battery. This in turn will affect the transmitted optical signal at an output extremity of the optical fiber. Thus, by recording said signal, establishing a spectrum of the recorded optical signal, locating signature peaks of the spectrum and associating said located signature peaks to predetermined chemical species, it is possible to identify the degradation and formation of chemical species during battery cycling and/or ageing, but also at which point in this cycling they appear. In further applications it is also possibly to asses the molar quantity of these chemical species.

The invention therefore allows to record in real-time, in operando, the appearance of chemical species and even quantify them. This opens the way to better understanding the degradation mechanism and instabilities of electrolytes which are linked to the apparition of certain chemical species, and therefore provide guidance to cure such parasitic reactions to enhance battery lifetime. In particular, the formation of the SEI, may be closely monitored using the invention. In addition, owing to this real-time knowledge of the chemical composition of the electrolyte, one may study the influence of different parameters such as temperature, current, voltage, etc. on the battery cycling. Finally, the method according to the invention can be adapted to any kind of battery cell, rendering it particularly convenient.

According to a particular embodiment of the invention, the method further comprises a step of cycling the battery, wherein the steps of generating an optical signal and transmitting it through the optical fiber, detecting, the transmitted optical signal at an output extremity of the optical fiber, and recording the detected optical signal over time are performed while cycling the battery. This in particular allows to identify the degradation and formation of chemical species during battery cycling

Preferably, to simplify the location of the signature wavelengths and their association to predetermined chemical species, after recording the detected optical signal over time, the method comprises a step of establishing a spectrum of said recorded optical signal.

In order to obtain not only the chemical composition of the battery, but also quantify the thus-characterized chemical species, the method further comprises a step of associating the recorded optical signal intensities of said signature wavelength to a molar quantity of the at least one predetermined chemical species.

To facilitate the characterization of the chemical species, the step of associating signature peaks to at least one predetermined chemical species includes a step of comparing the located signatures wavelengths to a spectra database associating particular infrared wavelengths to predetermined chemical species.

Preferably, the spectra database also includes a calibration curve associating a molar quantity of the at least one predetermined chemical species to the intensity of the optical signal for a particular wavelength.

Accord to particular embodiment of the invention, the method comprises a prior step of establishing the spectra database. Another possibility is to use already-established tables that provide absorption frequencies, usually expressed in wave numbers, for common types of molecular bonds and functional groups.

Accord to particular embodiment of the invention, the step of establishing the spectra database comprises the following sub-steps :

- inserting an optical fiber made of chalcogenide glass in a solution of a predetermined chemical species,
- detecting, using the infrared spectrometer, the transmitted optical signal at an output extremity of the optical fiber,
- recording the detected optical signal,
- locating a wavelength or a set of wavelength for which the recorded optical signal has an intensity above a predetermined threshold,
- entering within the spectra database the association of said wavelength or a set of wavelength to said predetermined chemical species.

In order to be able to quantify the quantity of chemical species within the battery, the molar quantity of the predetermined chemical species within the solution is recorded and the association of the intensity of the recorded optical signal of the wavelength or set of wavelengths and the molar quantity of the predetermined chemical species is entered in the database.

According to a particular embodiment of the invention, the optical fiber is embedded in an electrode of the battery cell. This allows to characterize the chemical species within the electrode of the battery.

According to a particular embodiment of the invention, the optical fiber is inserted through the electrolyte of the battery cell. This allows to characterize the chemical species within the electrolyte of the battery.

Preferably, the optical fiber is made from a material comprising essentially $Te_2As_3Se_5$ glass. This kind of chalcogenide glass is particularly suited to the invention as it easily is transparent to infrared signals the wavelengths or which are absorbed by the typical chemical species of batteries. An optical fiber according to FR2958403, which is hereby included by reference, can be particularly used.

Preferably, the diameter of the optical fiber is comprised between 100 and 400 $\mu$m. Indeed, should its diameter be above 400 $\mu$m, the fiber becomes rigid and inconvenient to connect to distant apparatuses. On the other hand, should its diameter be under 100 $\mu$m, it becomes to fragile or difficult to handle.

Preferably, in order to be able to transmit infrared signals the wavelengths or which are absorbed by the typical chemical species of batteries, the chalcogenide glass of the optical fiber is transparent to an electromagnetic radiation the wavenumber of which is comprised between 2 and 12 $\mu$m.

The invention also concerns a characterization device for identifying the chemical species within a battery cell, comprising :

- an optical fiber made of chalcogenide glass inserted through the battery cell,
- an electrical power source for charging and discharging the battery,
- an infrared optical signal generator generating, while cycling the battery, an optical signal through the optical fiber,
- a detector detecting the optical signal transmitted through the optical fiber at an output extremity of the optical fiber,

- a memory for recording the detected optical signal,
- a processor locating signature wavelengths for which the optical signal intensity is above a predetermined threshold within the spectrum and associating said located signature wavelengths to at least one predetermined chemical species.

According to a particular embodiment of the invention, the optical signal generator and detector are comprised within a spectrometer which is a Fourier transformed infrared spectrometer, preferably including a Mercury-cadmium-telluride detector with for example a spectral range comprised between 12000 $cm^{-1}$ and 600 $cm^{-1}$. This kind of apparatus is particularly well-suited for putting the invention into practice as it is convenient to use and provides a suitable precision.

**Brief description of the Figures**

The invention will be better understood in view of the following description, referring to the annexed Figures in which:

- Figure 1 is a schematic figure of a characterization device according to a particular embodiment of the invention ;
- Figure 2 is a schematic cut-off figure of the optical fiber of the characterization device of Figure 1 ;
- Figure 3 is a first graph illustrating a spectrum obtained using the characterization device and method according to the invention ;
- Figure 4 is a second graph illustrating a spectrum obtained using the characterization device and method according to the invention and a graph illustrating the cycling of the battery of Figure 1.

**Detailed Description**

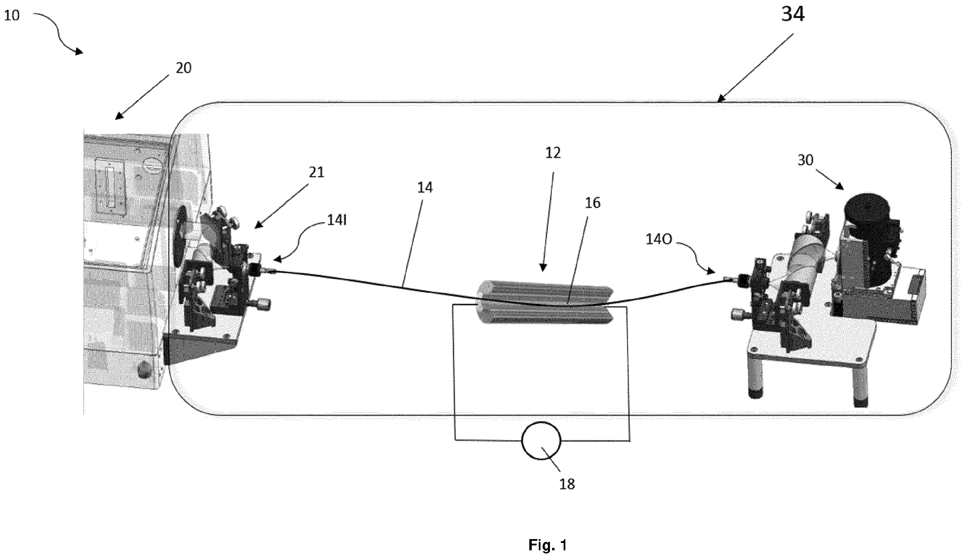

A characterization device 10 for identifying the chemical species within a battery cell 12 is shown on Figure 1.

Characterization device 10 comprises an optical fiber 14 made of chalcogenide glass inserted through the battery cell 12. Battery cell is preferably a Na-ion or Li-ion battery, and can have different formats such as a 18650, pouch, CR2032 or swagelock. On Figure 1, the battery cell is a 18650 cell. Naturally, it should be noted that these are merely examples of types and formats of battery cells and the invention may be used for any type of battery cell.

As can be seen on Figure 1, the optical fiber 14 is inserted through (embedded into) an electrode 16 of the battery cell 12. The electrode 16 can be either the positive, the negative electrode. As an alternative, the optical fiber 14 passes through the jelly roll of the battery cell 12 in its central space.

This allows to characterize the chemicals species within the electrode 16 material (either negative or positive). However, according to another embodiment, the optical fiber 14 may be inserted through the electrolyte of the battery cell 12 in order to characterize the chemicals species within the electrolyte. In that case, fiber 14 is integrated in the electrolyte between the separators (not shown on the Figures) of battery cell 12.

For example, the integration of the optical fiber into a 18650 cell 12 is presented in Figure 1. The 18650-instrumented cell is drilled with two holes of 0.8 mm on the center of the negative and positive sides of the cell 12 to allow the fiber 14 to pass through the central void of the jellyroll. The drilled cell 12 is dried under vacuum overnight at 80°C and introduce in argon-filled glove box. Using a needle (for example of a diameter of 0.45 mm) as a guide, the optical fiber 14 with a length of about 60 centimeters is passed through the cell 12. Once the fiber 14 is placed with approximately the same length of fiber going out from each part of the cell, the hole on the positive electrode side is closed with epoxy and cured for 24 hours. Then, about 5.3 ml of electrolyte is injected from the hole on the negative side. Finally, the second hole is also sealed with epoxy and cured for 24 hours.

Preferably, optical fiber 14 is made from a material comprising essentially $Te_2As_3Se_5$ glass. It should be noted that a material "comprising essentially" $Te_2As_3Se_5$ glass means that comprises at least 99% $Te_2As_3Se_5$ glass. For instance, impurities such as hydrogen can be occasionally found in the glass but do not factor for more than 1% of the optical fiber. This kind of chalcogenide glass is particularly suited to the invention as it easily is transparent to infrared signals the wavelengths or which are absorbed by the typical chemical species of batteries. In addition the glass transition of the $Te_2As_3Se_5$ fiber is 137 °C, which allows the integration in battery cells 12.

The diameter of the optical fiber 14 is preferably comprised between 100 and 400 $\mu$m. Indeed, should its diameter be above 400 $\mu$m, the fiber becomes rigid and inconvenient to connect to distant apparatuses. The diameter of the optical fiber 14 might be constant or the fiber 14 may be locally tapered to improve detection, as exemplified above. On the other hand, should its diameter be under 100 $\mu$m, it becomes to fragile or difficult to handle.

Preferably, in order to be able to transmit infrared signals the wavelengths or which are absorbed by the typical chemical species of batteries, the chalcogenide glass of optical fiber 14 is transparent to an electromagnetic radiation the wavenumber of which is comprised between 2 and 12 $\mu$m. In other words, spectrometer 20 emits in the mid-range infrared.

Characterization device 10 comprises an electrical power source 18 for charging and discharging the battery 12 in a sequential manner, also known as cycling the battery 12. Such an electrical power source 12 is known in itself and will not be described further.

Characterization device 10 also comprises an infrared optical signal generator generating, while cycling the battery, an optical signal through the optical fiber 14. The optical signal generator is the present case part of a spectrometer 20. A focusing accessory 21 may be added to focus the infrared beam emitted by the spectrometer 20 as can be shown on Figure 1.

The infrared optical signal is sent to optical fiber 14 at an input extremity 141 of the optical fiber 14, shown on the left of Figure 1.

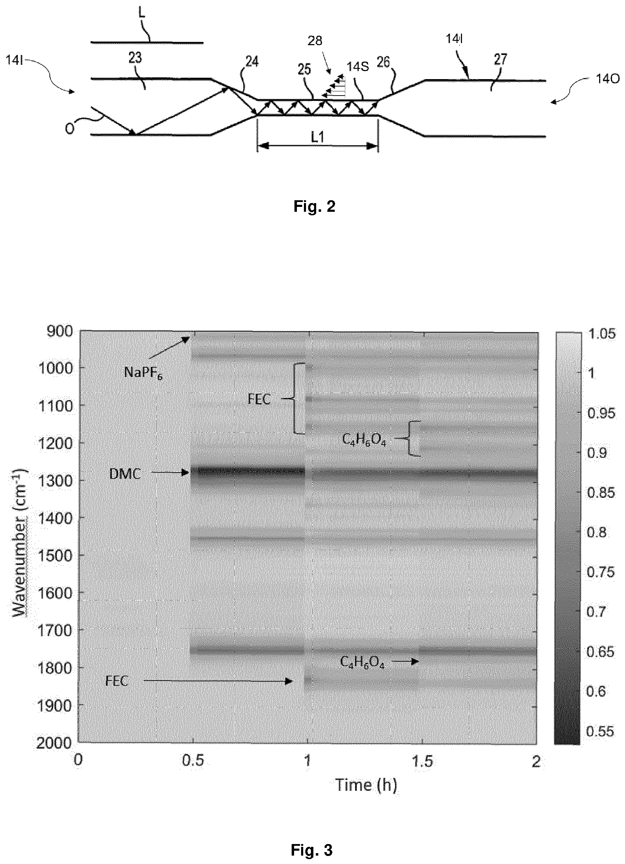

More particularly, as can be seen on Figure 2, fiber 14 extends in a general longitudinal direction L between input end 141 and output end 140.

Fiber 14 comprises, from the input end 141 to the second end 140, a first fiber section 23 for guiding infrared waves, this first section 23 being connected on its side remote from the input end 141 to a first point connection 24 of a second, detection section 25, said second section 25 being connected by a second point 26 remote from the first connection point 24 to a third fiber section 27 for guiding infrared waves.

The second sensing section 25 of the fiber 2 has a transverse width in at least one dimension, a diameter or cross-section, which is less than the transverse width, or diameter or cross-section of the first section 23, and which is less than the transverse width, diameter or cross-section of the third section 27. In other words, the second sensing section 25 is tapered. However, it is also possible to use a fiber 14 that is homogenous diameter or cross-section along its entire length.

The second sensing section 25 of the fiber 2 extends over a non-zero length L1 of the fiber 14 between the first and second connection points 24, 26 and between the first section 23 and the third section 27.

For example, the fiber 14 has an average diameter of about 400 μm in the first section 23 and in the third section 27, while the fiber 14 has an average diameter of about 100 μm in the second detection section 25 for a length L1 of the second detection section of about 10 cm. The first section 23 is longer than the length of the second detection section 25. The third section 27 has a length greater than the length L1 of the second detection section 25.

The first connection point 24 is for example formed by a cross-sectional area tapering from the first section 23 to the second detection section 25, being for example truncated conical as shown in figure 2. The second connection point 26 has for example a cross-section widening from the second detection section 25 to the third section 27, being for example truncated conical in shape as shown in figure 2. Between the first and second connection points 24, 26, the second detection section 25 has for example a constant cross-sectional width and/or a constant cross-sectional diameter and/or a constant cross-section.

The second detection section 25 is intended to come into contact with an external medium in order to detect the disturbances brought by this external medium to the propagation of the infrared waves in the fiber 14. In this particular embodiment, second detection section 25 being tapered, it makes the optical fiber 14 more sensitive to those disturbances it allows more reflections of the infrared waves within second section 25.

Figure 2 shows the path of an optical signal O, here an infrared wave, sent from the input end 141 into the section 23 by thick arrows inside the fiber 14. Due to the narrowing of the cross-section of the fiber 14. in the second detection section 25, there are more reflections of the wave in this second section 25 against the outer surface 14S of the fiber 14.

When an external medium is brought into contact with the second sensing section 25, the propagation of the infrared wave O in this second section 25 is disturbed, due to the fact that a portion of the infrared wave O passes from the second section 25 to the external medium. Therefore, the contact of the second detection section 25 with an external medium will have an influence on the infrared wave O which will be transmitted from first section 23 to third section 27.

To be more precise, infrared wave O propagates through the fiber 14 by a series of total internal reflections within second section 25. The interference between the incident and reflected optical signal waves results in the generation of an evanescent wave field 28 inside the sample, which is a function of its refractive index and which amplitude decreases exponentially from the fiber core. The evanescent wave field 28 will be partially absorbed at each reflection leading to a reduction of the corresponding wavelength in the transmission spectra.

The number of reflections (*N*) is a function of the fiber length (*L*), its diameter (*d*) and the angle of incidence of the light from normal (*θ*):

$$N = L \frac{\tan(90 - \theta)}{d}$$

Here, the external medium being the electrode 16, or the electrolyte in other variants, of battery cell 12, the chemical composition of the electrode 16, notably bonds of the molecules composing the chemical components, will have an influence of the infrared wave O transmitted from input end 141 to output end 140.

The working principle behind the invention is to take advantage of this fact and use fiber evanescent wave spectroscopy.

Hence, characterization device 10 comprises a detector 30 detecting the optical signal transmitted through the optical fiber 14 at an output extremity of the optical fiber 140 as the optical fiber 14 is used in a transmission mode.

However, in another, non-illustrated variant, detector 30 could be placed at the input 141 extremity of the optical fiber in case it is used in a reflection mode. In that case, a mirror is placed at the output extremity 140 of the fiber.

It should also be noted that even though detector 30 is a separate device from spectrometer 20 on Figure 1, this is only an exemplary embodiment as detector 30 can be comprised within spectrometer 20.

Detector 30 preferably is a mecury-cadmium-telluride (MCT) detector cooled with liquid nitrogen. The spectral range of detector 30 may for example be comprised between 12000 $cm^{-1}$ and 600 $cm^{-1}$.

The amplitude of the optical signal O is controlled - around 10000 for a 150 $\mu$m diameter and 70 cm long $Te_2As_3Se_5$ fiber. For all the spectra, 100 scans are acquired. The resolution is for example 4 $cm^{-1}$. Preferably, the background is acquired before or after the injection of the electrolyte in the cell 12.

Focusing accessory 21, battery cell 12, optical fiber 14 and detector 30 are advantageously placed within a purge chamber 34 for purging any parasite chemical component such as the outside ambient air, and in particular carbon dioxide ($CO_2$) which is a chemical species of particular interest in the context of observing the decomposition of an electrolyte for example.

Characterization device 10 also comprises a memory (not shown on the

Figures) for recording the detected optical signal O. Said memory may be included within the spectrometer or within a computer (not shown) connected to the spectrometer 20.

Characterization device 10 also comprises a processor (not shown on the

Figures), for example located within the spectrometer 20 or within a computer, locating signature wavelengths for which the optical signal O intensity is above a predetermined threshold. In other words, peaks of the optical signal O are detected.

Preferably, to simplify the location of the signature wavelengths and their association to predetermined chemical species, after recording the detected optical signal over time, the spectrometer 20 establish a spectrum of said recorded optical signal O.

Then, the processor associates said located signature wavelengths, or spectrum peaks, to at least one predetermined chemical species.

To facilitate the characterization of the chemical species, associating signature peaks to at least one predetermined chemical species involves comparing the located signatures wavelengths to a spectra database associating particular infrared wavelengths to predetermined chemical species.

The spectra database may be established earlier on by inserting the optical fiber 14 in a solution of a pure, predetermined chemical species. Then, using the infrared spectrometer 20, the transmitted optical signal O is detected and recorded, and a wavelength or a set of wavelength for which the recorded optical signal has an intensity above a predetermined threshold are detected. Thus, the signatures wavelengths of said species are obtained and entered within the spectra database. This can be repeated for different expected predetermined chemical species.

Another possibility is to use already-established tables that provide absorption frequencies, usually expressed in wave numbers, for common types of molecular bonds and functional groups.

An illustration of the results obtained through the use of a device according to the invention can be seen on Figure 3. Figure 3 illustrates a spectre of the optical signal through optical fiber 14 over time with the intensity of the signal shown in increasingly deep shades of grey, different chemical species can be identified within the electrode. At 0,5h, the optical signal O has a high intensity at a wavelength corresponding to a wavenumber of 900$cm^{-1}$ is acquired. This particular wavelength corresponds to the signature wavelength of $NaPF_6$. Thus, the presence of $NaPF_6$ can be attested from 0,5h after the beginning of the cycling of the battery.

In the same way, at 0,5h, a series of wavelengths for which the intensity of the optical signal is high is identified. This series of wavelengths are signature wavelengths of dimethyl carbonate (DMC). Thus, the presence of DMC can be attested from 0,5h after the beginning of the cycling of the battery.

In the same way, at 1 h, a series of wavelengths for which the intensity of the optical signal is high is identified. This series of wavelengths are signature wavelengths of fluoroethylene carbonate (FEC). Thus, the presence of FEC can be attested from 1h after the beginning of the cycling of the battery.

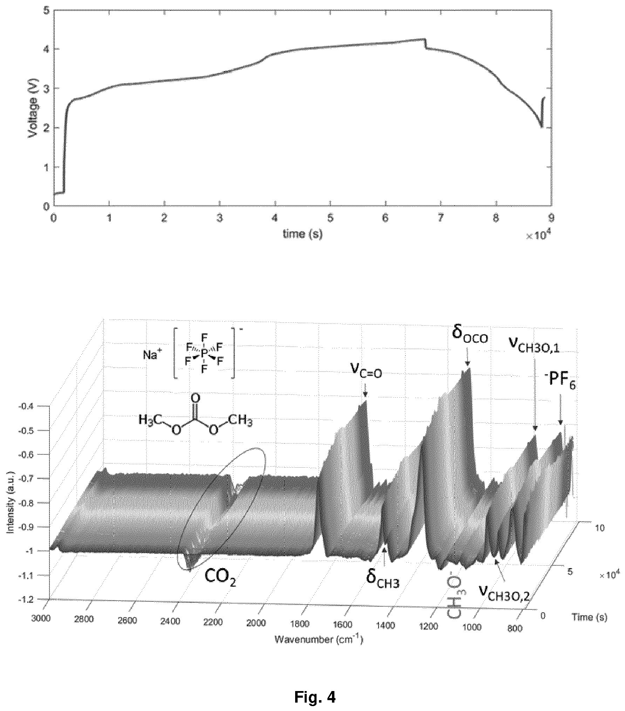

Another example can be seen on Figure 4, where the spectrum of the optical signal through optical fiber 14 over time has been plotted to identify different chemical species within an electrode, and is compared to a plot of the voltage over time within the battery cell 12 to link the cycling and the spectrum. The identified chemical species are shown above or under the characteristic peaks (wavenumber for which a high intensity is detected and recorded).

Preferably, in order to obtain not only the chemical composition of the battery, but also quantify the thus-characterized chemical species, the processor associates the recorded optical signal intensities of said signature wavelength to a molar quantity of the at least one predetermined chemical species.

To that end, the spectra database can include a calibration curve associating a molar quantity of the at least one predetermined chemical species to the intensity of the optical signal for a particular wavelength.

Such a calibration curve can be obtained by taking into account that the fraction of the light absorbed depends on the concentration and the absorption wavelength. In order to quantify the species that are present within a medium, the Beer-Lambert law for evanescent fiber is then transformed into :

$$A(\lambda_p) = L \sum_{i=1}^{N} \varepsilon_{pi}(\lambda_p) c_i$$

where $A(\lambda_p)$ is the absorbance of a solution containing several chemical species, $L$ is the Waveguide length in cm (length of the fiber 14), $c$ is the concentration on mol L$^{-1}$ and $\varepsilon_{pi}(\lambda_p)$ is the molar absorption of the $i$ species in L mol$^{-1}$ cm$^{-1}$.

Thus, for a chemical species characterized by $p$ wavelengths, the Beer-Lambert law for evanescent fiber can be translated into :

$$\begin{cases} A(\lambda_1) = L.\,[\varepsilon_{11}(\lambda_1)c_1 + \varepsilon_{12}(\lambda_1)c_2 + \cdots + \varepsilon_{1N}(\lambda_1)c_N \\ A(\lambda_2) = L.\,[\varepsilon_{21}(\lambda_2)c_1 + \varepsilon_{22}(\lambda_2)c_2 + \cdots + \varepsilon_{2N}(\lambda_2)c_N \\ \qquad\qquad\qquad \cdots \\ A(\lambda_p) = L.\,[\varepsilon_{p1}(\lambda_p)c_1 + \varepsilon_{p2}(\lambda_p)c_2 + \cdots + \varepsilon_{pN}(\lambda_p)c_N \end{cases}$$

To determine the coefficient $\varepsilon_{pi}(\lambda_p)$, different solutions of different concentrations (or different molar quantities) of a predetermined chemical species are prepared, and a linear regression of the absorbance against the concentration of the chemical species can be plotted. Then the association of the intensity of the recorded optical signal of the signature wavelength or set of wavelengths to the concentration of the predetermined chemical species is entered in the spectra database. This allows to calibrate the device and the method according the invention.

The invention may be used to characterize the chemical species within any kind of batteries. In particular, the invention may characterize typical solvents used in organic electrolytes such as :

- Cyclic ethers (tetrahydrofurane, dioxane, 1,3-dioxolane) ;
- Linear ethers (methyl, ethyl and propyl formate, methyl and ethyl acetate, methyl and ethyl propionate) aliphatic ethers ;
- Linear carbonates (ethylene carbonate, dimethyl carbonate, ethyl methyl carbonate, diethyl carbonate) ;
- Cyclic carbonates (ethylene carbonate, propylene carbonate, 1,2-butylene carbonate, 2,3-butylene carbonate) ;
- Fluorinated (4-fluorotoluene, 1,1,2,2-tetrafluoroethyl 2,2,3,3-tetrafluoropropyl ether, di-fluoro ethylene carbonate, ethyl difluoroacetate); and
- aqueous electrolytes, where the solvent is water mixed with an acid ($H2SO4$), a base (KOH), or a salt (ZnCl2),
- any mixtures of the above.

The invention is also suited to characterize typical additives used in organic electrolytes such carbonate (Vinylene carbonate, Fluoroethylene carbonate), tris(trimethylsilyl)phosphite (TMSPi) and succinonitrile (SN), lithiumbis(oxalato)borate (LiBOB), and any mixture thereof.

The invention is also suited to characterize typical salts used in organic electrolytes such as fluorinated salts like Lithium hexafluorophosphate (LiPF6) or Sodium hexafluorophosphate (NaPF6).

The invention therefore allows to record in real-time, in operando, the decomposition of electrolytes, the appearance of chemical species and even quantify them. This opens the way to better understanding the degradation mechanism and instabilities of electrolytes which are linked to the apparition of certain chemical species, and therefore provide guidance to cure such parasitic reactions to enhance battery lifetime. In particular, the formation of the SEI, may be closely monitored using the invention. In addition, owing to this real-time knowledge of the chemical composition of the electrolyte, one may study the influence of different parameters such as temperature, current, voltage, etc. on the battery cycling. Finally, the method according to the invention can be adapted to any kind of battery cell, rendering it particularly convenient.

**List of references**

10 : Characterization device
12 : Battery cell
14 : Optical fiber
141 : input end of the fiber
140 : Output end of the fiber
16 : Electrode of the cell
18 : Electrical power source
20 : Spectrometer
23 : First section of the fiber
24 : First connection point of the fiber
25 : Second section of the fiber
26 : Second connection point of the fiber
27 : Third section of the fiber
28 : Evanescent wave field
30 : Detector
34 : Purge chamber
L : Longitudinal direction of the fiber
L1 : Length of the second detection section
O : Optical signal

**Claims**

1. Method for operando characterization of the chemical composition of a battery cell (12), comprising the following steps :

   - inserting an optical fiber (14) made of chalcogenide glass through the battery cell,
   - generating an optical signal (O) and transmitting it through the optical fiber (14),
   - detecting, using an infrared spectrometer (20), the transmitted optical signal (O) at an output extremity (140) of the optical fiber (14),
   - recording the detected optical signal (O) over time,
   - locating signature wavelengths for which the optical signal (O) intensity is above a predetermined threshold,
   - associating said located signature wavelengths to at least one predetermined chemical species.

2. Characterization method according to claim 1, wherein it further comprises a step of cycling the battery, wherein the steps of generating an optical signal (O) and transmitting it through the optical fiber (14), detecting, the transmitted optical signal (O) at an output extremity (140) of the optical fiber (14), and recording the detected optical signal over time are performed while cycling the battery (12).

3. Characterization method according to claim 1 or 2, wherein it includes, after recording the detected optical signal (O) over time, a step of establishing a spectrum of said recorded optical signal (O).

4. Characterization method according to any one of the preceding claims, wherein it further comprises a step of associating the recorded optical signal (O) intensities of said signature wavelength to a molar quantity of the at least one predetermined chemical species.

5. Characterization method according to any one of the preceding claims, wherein the step of associating signature peaks to at least one predetermined chemical species includes a step of comparing the located signatures wavelengths to a spectra database associating particular infrared wavelengths to predetermined chemical species.

6. Characterization method according to claim 5, wherein the spectra database also includes a calibration curve associating a molar quantity of the at least one predetermined chemical species to the intensity of the optical signal (O) for a particular wavelength.

7. Characterization method according to any one of claims 4 to 6, wherein it comprises a prior step of establishing the spectra database.

8. Characterization method according to claim 7 wherein the step of establishing the spectra database comprises the following sub-steps :

- inserting an optical fiber (14) made of chalcogenide glass in a solution of a predetermined chemical species,
- detecting, using the infrared spectrometer (20), the transmitted optical signal at an output extremity of the optical fiber (14),
- recording the detected optical signal (O),
- locating a wavelength or a set of wavelength for which the recorded optical signal (O) has an intensity above a predetermined threshold,
- entering within the spectra database the association of said wavelength or a set of wavelength to said predetermined chemical species.

9. Characterization method according to claim 8, wherein the molar quantity of the predetermined chemical species within the solution is recorded and the association of the intensity of the recorded optical signal (O) of the wavelength or set of wavelengths and the molar quantity of the predetermined chemical species is entered in the database.

10. Characterization method according to any one of the preceding claims, wherein the optical fiber (14) is embedded in an electrode of the battery cell (12).

11. Characterization method according to any one of claims 1 to 10, wherein the optical fiber (14) is inserted through the electrolyte of the battery cell (12).

12. Characterization method according to any one of the preceding claims, wherein the optical fiber (14) is made from a material comprising essentially $Te_2As_3Se_5$ glass.

13. Characterization method according to any one of the preceding claims, wherein the diameter of the optical fiber (14) is comprised between 100 and 400 $\mu$m.

14. Characterization method according to any one of the preceding claims, wherein the chalcogenide glass of the optical fiber (14) is transparent to an electromagnetic radiation the wavenumber of which is comprised between 2 and 12 $\mu$m.

15. Characterization device for identifying the chemical species within a battery cell, comprising :

- an optical fiber (14) made of chalcogenide glass inserted through the battery cell (12),
- an electrical power source (18) for charging and discharging the battery (12),
- an infrared optical signal generator (20) generating, while cycling the battery (12), an optical signal through the optical fiber (14),
- a detector (30) detecting the optical signal (O) transmitted through the optical fiber (14) at an output extremity (140) of the optical fiber,
- a memory for recording the detected optical signal (O),
- a processor locating signature wavelengths for which the optical signal (O) intensity is above a predetermined threshold within the spectrum and associating said located signature wavelengths to at least one predetermined chemical species.

16. Characterization device according to claim 15, wherein the optical signal generator and detector (30) are comprised within a spectrometer (20), which is a Fourier transformed infrared spectrometer, preferably including a Mercury-cadmium-telluride detector with for example a spectral range comprised between 12000 cm$^{-1}$ and 600 cm$^{-1}$.

Fig. 1

**Fig. 2**

**Fig. 3**

Fig. 4

Europäisches
Patentamt

European
Patent Office

Office européen
des brevets

# EUROPEAN SEARCH REPORT

Application Number

EP 21 30 6068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2021/019405 A1 (CAMBRIDGE ENTPR LTD [GB]) 4 February 2021 (2021-02-04)<br>* page 1, line 2 - line 5 *<br>* page 13, line 17 *<br>* page 26, line 12 - line 17 *<br>* page 28, line 12 - line 13 *<br>* page 31, line 1 - page 32, line 21 *<br>* figures 2,4,7-9 * | 1-11,13,15<br>1,2,12,15 | INV.<br>G01N21/27<br>G01N21/3577<br>G01N21/552<br><br>ADD.<br>G01N21/75 |
| X<br>Y | US 5 949 219 A (WEISS JONATHAN D [US]) 7 September 1999 (1999-09-07)<br>* column 4, lines 60-67 *<br>* column 5, lines 28-39 *<br>* column 6, lines 21-27 *<br>* column 7, line 9 - column 10, line 25 *<br>* column 12, line 58 - line 67 *<br>* column 15, line 40 *<br>* figures 2-5,8 * | 1,3,14-16<br>12 | |
| Y,D | FR 2 958 403 A1 (UNIV RENNES [FR]; CENTRE NAT RECH SCIENT [FR]) 7 October 2011 (2011-10-07)<br>* page 5, line 9 * | 12 | TECHNICAL FIELDS SEARCHED (IPC)<br><br>G01N |
| Y | GHANNOUM ABDULRAHMAN ET AL: "Fiber optic monitoring of lithium-ion batteries: A novel tool to understand the lithiation of batteries", 2016 IEEE SENSORS, IEEE, 30 October 2016 (2016-10-30), pages 1-3, XP033036977, DOI: 10.1109/ICSENS.2016.7808695 [retrieved on 2017-01-05]<br>* abstract *<br>* paragraphs [IIIA], [IIIB], [IIIC] *<br>* figure 1 * | 1,2,15 | |

-/--

The present search report has been drawn up for all claims

| Place of search | Date of completion of the search | Examiner |
|---|---|---|
| Munich | 24 November 2021 | Brauer, Jan |

EPO FORM 1503 03.82 (P04C01)

page 1 of 2

Europäisches Patentamt

European Patent Office

Office européen des brevets

**EUROPEAN SEARCH REPORT**

Application Number

EP 21 30 6068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHUO CUI ET AL: "From Selenium- to Tellurium-Based Glass Optical Fibers for Infrared Spectroscopies", MOLECULES, vol. 18, no. 5, 10 May 2013 (2013-05-10), pages 5373-5388, XP055135674, DOI: 10.3390/molecules18055373 * abstract * | 1-16 | |
| A | XUNSI WANG ET AL: "Investigations of GeTeAgI chalcogenide glass for far-infrared application", SPECTROCHIMICA ACTA PART A: MOLECULAR AND BIOMOLECULAR SPECTROSCOPY, ELSEVIER, AMSTERDAM, NL, vol. 86, 9 November 2011 (2011-11-09), pages 586-589, XP028341558, ISSN: 1386-1425, DOI: 10.1016/J.SAA.2011.11.018 [retrieved on 2011-11-18] * abstract * | 1-16 | |

TECHNICAL FIELDS SEARCHED (IPC)

The present search report has been drawn up for all claims

| Place of search | Date of completion of the search | Examiner |
|---|---|---|
| Munich | 24 November 2021 | Brauer, Jan |

## ANNEX TO THE EUROPEAN SEARCH REPORT
## ON EUROPEAN PATENT APPLICATION NO.

EP 21 30 6068

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2021

| Patent document cited in search report | | Publication date | Patent family member(s) | | Publication date |
|---|---|---|---|---|---|
| WO 2021019405 | A1 | 04-02-2021 | NONE | | |
| US 5949219 | A | 07-09-1999 | NONE | | |
| FR 2958403 | A1 | 07-10-2011 | CN | 103025672 A | 03-04-2013 |
| | | | EP | 2552844 A1 | 06-02-2013 |
| | | | FR | 2958403 A1 | 07-10-2011 |
| | | | US | 2013102066 A1 | 25-04-2013 |
| | | | WO | 2011121086 A1 | 06-10-2011 |

EPO FORM P0459

For more details about this annex : see Official Journal of the European Patent Office, No. 12/82

**EP 4 124 849 A1**

**REFERENCES CITED IN THE DESCRIPTION**

**Patent documents cited in the description**

- FR 2958403